# EUROPÄISCHE PATENTSCHRIFT

(11) **EP 2 983 937 B1**
(45) Veröffentlichungstag und Bekanntmachung des Hinweises auf die Patenterteilung: **11.10.2017**
(21) Anmeldenummer: 14715542.8
(22) Anmeldetag: 29.03.2014
(51) Int. Cl.: B60K 37/06, B60R 16/037, G10L 15/22

(54) **VERFAHREN UND VORRICHTUNG ZUR PROAKTIVEN DIALOGFÜHRUNG**
METHOD AND DEVICE FOR PROACTIVE DIALOGUE GUIDANCE
PROCÉDÉ ET DISPOSITIF DE CONDUITE PROACTIVE DE DIALOGUE

(30) Priorität: 10.04.2013 DE 102013006173
(43) Veröffentlichungstag der Anmeldung: 17.02.2016
(73) Patentinhaber: AUDI AG, 85045 Ingolstadt (DE)
(72) Erfinder: LACHER, Peter, 85049 Ingolstadt (DE)
(74) Vertreter: Bauer, Dominik Michael
(86) Internationale Anmeldenummer: PCT/EP2014/000847
(87) Internationale Veröffentlichungsnummer: WO 2014/166601

(56) Entgegenhaltungen:
- EP-A2- 0 893 308

## Beschreibung

Die Erfindung betrifft ein Verfahren und ein entsprechendes Informationssystem zur proaktiven Dialogführung eines Informationssystems mit einem Nutzer, wobei von dem Informationssystem an den Nutzer potentiell zu übermittelnde Informationen eine Relevanz- und Plausibilitätsprüfung, basierend auf Kontextwissen über den Nutzer durchlaufen.

Fahrzeuge zeichnen sich verstärkt dadurch aus, dass sie in der Lage sind, durch technische Systeme mit einem Insassen, insbesondere einem Fahrer in Interaktion zu treten. Dafür kommen vermehrt Mensch-Maschine-Interaktionssysteme (MMI) zum Einsatz, welche einen jeweiligen Nutzer mit Informationen versorgen. Eine Informationsübermittlung kann dabei aus verschiedenen Gründen schwierig sein. Zum Einen steht derartigen Informationssystemen durch eine Verbindung zu externen Datenquellen, wie bspw. dem Internet, eine Vielzahl an Informationen zur Verfügung, von denen nur eine Teilmenge für den jeweiligen Nutzer von Interesse ist. Zum Anderen sind speziell bei einer Interaktion mit einem Fahrer Zeitpunkt und Art der Informationsübermittlung von entscheidender Bedeutung, da Einblendungen in den optischen Wahrnehmungsbereich des Fahrers (Popups) diesen irritieren und zu einer Verkehrsgefährdung beitragen können.

In der DE 10 2007 045 147 A1 ist ein Tachograph offenbart, welcher diverse Warnungen und Fehlermeldungen auf andere Art als über optische Einblendung wiedergibt. Dazu wird eine Sprachsequenz, welche Hinweise auf die Fehlermeldungen oder Warnungen enthält, erstellt. Ebenfalls ist eine Einrichtung zur Ausgabe von Informationen Gegenstand der DE 10 2007 045 147 A1. Diese Einrichtung weist eine Kontrolleinheit mit einer Vielzahl von Anwendungen sowie ein optisches Anzeigemedium zur Darstellung von Informationen auf, wobei eine Teilmenge der Informationen als wichtig eingestuft ist. Eine Beurteilung, ob eine Information als wichtig eingestuft wird, erfolgt dabei durch einen an einer Steuereinheit angeordneten Filter.

In der DE 102 07 993 A1 ist ein Verkehrsdaten-Informationssystem für einen Einsatz in Fahrzeugen offenbart, welches verkehrsbezogene Daten aufnimmt, gemäß vorgegebenen Kriterien korreliert, die so kombinierten Daten nach Relevanz sortiert und über Mittel zur Informationsweitergabe einem jeweiligen Fahrer zur Verfügung stellt. Die Kriterien, nach denen Daten ausgewertet und bzgl. Relevanz sortiert werden, können einerseits fest definiert sein oder aber auch vollständig oder zum Teil von dem jeweiligen Fahrer individuell vorgegeben werden.

In der DE 10 2010 051 833 A1 sind ein Verfahren und eine Vorrichtung offenbart, welche zur Interaktion eines Fahrzeugs mit einem Nutzer verwendet werden können, wobei die Vorrichtung mindestens eine Eingabeeinrichtung, mindestens eine Auswerteeinrichtung und mindestens eine Ausgabeeinrichtung umfasst, wobei einem Ausgangszustand mindestens eine Zustandsinformation und mindestens ein Folgezustand zuzuordnen sind, wobei von einem Ausgangszustand in einen Folgezustand gewechselt wird, falls im Ausgangszustand eine folgezustandsspezifische Übergangsbedingung erfüllt wird, wobei mittels der mindestens einen Eingabeeinrichtung eine Nutzereingabe eingebbar ist, wobei mittels der Auswerteeinrichtung in dem Ausgangszustand die mindestens eine Nutzereingabe auswertbar ist, wobei die mindestens eine folgezustandsspezifische Übergangsbedingung des Ausgangszustands erfüllt ist, falls die ausgewertete Nutzereingabe mit mindestens einer vorbestimmten Nutzereingabe übereinstimmt, wobei nach dem Wechsel in den Folgezustand mittels der mindestens einen Ausgabeeinrichtung die dem Folgezustand zugeordnete Zustandsinformation ausgebbar ist.

Die gattungsbildende europäische Patentanmeldung EP 0 893 308 A2 offenbart einen virtuellen Agenten für ein Unterhaltungssystem eines Fahrzeugs, der einem Fahrer des Fahrzeugs Fahrzeugdaten bereitstellt und das Fahrzeug gemäß aktueller Bedürfnisse des Fahrers einstellt.

Vor dem Hintergrund des Standes der Technik ist es nunmehr eine Aufgabe der vorliegenden Erfindung, einen Nutzer durch Initiierung eines Dialogs so zu unterstützen, dass dieser in seiner Aufmerksamkeitsleistung nicht durch irrelevante Informationen abgelenkt und dennoch mit den für ihn relevanten Informationen versorgt wird.

Diese Aufgabe wird erfindungsgemäß durch ein Verfahren mit den Merkmalen des unabhängigen Patentanspruchs 1 und durch ein Informationssystem mit den Merkmalen des unabhängigen Patentanspruchs 7 gelöst. Weitere vorteilhafte Merkmale sind den jeweiligen Unteransprüchen zu entnehmen.

Bei einem Verfahren zur Interaktion mit einem Nutzer der eingangs beschriebenen Art wird die Aufgabe erfindungsgemäß dadurch gelöst, dass die von dem erfindungsgemäß vorgesehenen Informationssystem potentiell proaktiv an den Nutzer zu übermittelnden Informationen eine auf Kontextwissen über den Nutzer basierende Relevanz- und Plausibilitätsprüfung durchlaufen.

Erfindungsgemäß ist dabei ein Verfahren zur proaktiven Dialogführung eines Informationssystems mit einem Nutzer vorgesehen, wobei von dem Informationssystem, welches in einem Fahrzeug oder einem anderen mobilen technischen System integriert ist, an den Nutzer potentiell zu übermittelnde Informationen eine Relevanz- und/oder Plausibilitätsprüfung, basierend auf Kontextwissen über den Nutzer, durchlaufen und bei Erkennen von zu übermittelnden Informationen das Informationssystem proaktiv einen Dialog mit dem Nutzer initiiert.

Eine proaktive, d. h. von dem erfindungsgemäß vorzusehenden Informationssystem initiierte Interaktion kann den Nutzer unterstützen, wenn dadurch relevante Informationen für den Nutzer bereitgestellt werden. Im Gegensatz zu gängigen Methoden, wie bspw. Pop-up Fenstern, welche unaufgefordert und ohne Interventionsmöglichkeit für den Nutzer erscheinen, sieht das erfindungsgemäße Verfahren nunmehr vor einer Übermittlung und/oder Anzeige relevanter Informationen zunächst eine Prüfung der an den Nutzer potentiell zu übermittelnden Informationen vor. Diese Prüfung findet im Hinblick auf Plausibilität und Relevanz statt. Da eine gegebene Information nicht für jeden Nutzer gleich plausibel oder gleich relevant erscheint, ist es für eine sinnvolle proaktive Dialogführung vorteilhaft, wie erfindungsgemäß vorgesehen, auf einen Kontext des jeweiligen Nutzers zu reagieren und in Abhängigkeit von diesem Kontext eine Relevanz- und Plausibilitätsprüfung von potentiell zu übermittelnden Informationen vorzunehmen. Das Wissen um den Kontext des jeweiligen Nutzers kann das erfindungsgemäß vorzusehende Informationssystem aus allen technisch realisierbaren Mitteln, d. h. bspw. durch eine Eingabe des jeweiligen Nutzers, durch Bereitstellung durch einen Servicemitarbeiter, durch digitale Informationssysteme oder ähnliches erlangen. Das Kontextwissen kann ferner in geeigneter Weise für das Informationssystem abrufbar, in einer Speichereinheit hinterlegt werden. Dabei kann die Speichereinheit auch Teil des Informationssystems sein. Wurde eine Information auf Plausibilität und Relevanz geprüft und für relevant und plausibel befunden, so wird diese verwendet, um mit dem Nutzer proaktiv in Kontakt zu treten. Dabei kann die Information auf einer Anzeige angezeigt oder für den Nutzer akustisch wahrnehmbar übermittelt werden.

Unter relevanten Informationen sind im Rahmen des erfindungsgemäßen Verfahrens bzw. des erfindungsgemäßen Informationssystems alle Informationen zu verstehen, welche für einen jeweiligen Nutzer in seinem jeweiligen Kontext relevant erscheinen, d. h. den jeweiligen Nutzer in seinen Planungen und/oder Handlungsabsichten unterstützen oder mit zusätzlichen Fakten versorgen, welche in seiner jeweiligen Situation wichtig sein oder werden könnten. Derartige Informationen sind insbesondere Verkehrsdaten, Wetterdaten, Daten über den Zustand des jeweiligen Fahrzeugs, Meldungen und Nachrichten über allgemein wichtige Ereignisse, Meldungen und Nachrichten über Ereignisse, welche den Nutzer betreffen sowie die Kommunikation mit weiteren Personen oder Systemen.

Unter Kontextwissen über einen Nutzer sind im Kontext des erfindungsgemäßen Verfahrens bzw. Informationssystems Daten zu verstehen, welche Auskunft über Planungen und Handlungsintentionen des jeweiligen Nutzers geben. Dies können insbesondere Daten über den Fahrstil, bevorzugte Orte von Interesse, regelmäßige Handlungsmuster, aber auch Daten über Interessen und ein bevorzugtes soziales Umfeld sein. Weiterhin können auch Daten über ein Persönlichkeitsprofil des jeweiligen Nutzers verwendet werden, um die Relevanzprüfung auf den Nutzer abzustimmen.

Der Nutzer wird durch die Relevanzprüfung dahingehend entlastet, dass er nicht mit für ihn irrelevanten Informationen belästigt oder durch diese abgelenkt wird.

In einer möglichen weiteren Ausführungsform des erfindungsgemäßen Verfahrens ist vorgesehen, dass der proaktiv initiierte Dialog des erfindungsgemäß vorgesehenen Informationssystems mit dem Nutzer in Form von Sprache erfolgt.

Es ist gemäß einer Ausführungsform des erfindungsgemäßen Verfahrens vorgesehen, dass der proaktive Dialog in Form einer verbalen Frage eingeleitet wird.

Ein Beispiel für eine solche proaktive Interaktion könnte sein: "Darf ich Ihnen Informationen zum nächsten Inspektionsintervall mitteilen?" Der Nutzer kann selbstbestimmt darauf reagieren und die Anfrage, vorzugsweise durch sprachliche Reaktion, annehmen oder ablehnen. Die Reaktion des Nutzers kann dabei in verbaler Form oder durch Betätigung geeigneter Eingabemittel erfolgen.

Speziell im Straßenverkehr sind Ablenkungen, bspw. durch visuelle Einblendungen zu vermeiden. Eine Interaktion auf Sprachbasis ist für den Nutzer, insbesondere den Fahrer eines Fahrzeugs aufmerksamkeitsschonend und entspricht darüber hinaus der bevorzugten Interaktionsmethode der Menschen untereinander. Der Nutzer kann die ihm übermittelten Informationen dadurch schnell aufnehmen und angemessen und selbstbestimmt darauf reagieren, d. h. die zu übermittelnden Informationen gegebenenfalls auch ablehnen. Dabei kann eine Antwort auf die erfindungsgemäß bspw. verbal geäußerte Frage auch in anderer als sprachlicher Form erfolgen, bspw. durch Betätigen einer mechanischen oder elektronischen Vorrichtung, wie bspw. einem Lenkstockschalter oder ähnlichem.

Um einem Nutzer, insbesondere dem Fahrer eines Fahrzeugs, einen selbstbestimmten Umgang mit den ihm zur Verfügung stehenden Informationen zu ermöglichen, ist es nötig, bei der Informationsübermittlung seitens des erfindungsgemäß bereitgestellten Informationssystems, eine Möglichkeit zur Interaktion und ggf. Intervention durch den Fahrer zu gewährleisten. Der Nutzer des Informationssystems soll in der Lage sein, die ihm dargebotenen Informationen zu regulieren und dadurch seine eigene Aufmerksamkeitsleistung zu kontrollieren. Diese Interventionsmöglichkeit wird erfindungsgemäß, wie voranstehend beschrieben, dadurch ermöglicht, dass die Informationsübermittlung mit einer Frage gestartet wird, welche der Nutzer ablehnen und die Interaktion dadurch abbrechen oder verzögern kann. Dadurch ist es dem Nutzer möglich, ein selbstbestimmtes Informationsmanagement in Interaktion mit dem Informationssystem zu gestalten.

Weiterhin ist es möglich, durch das erfindungsgemäße Verfahren bereits im Vorfeld der Interaktion regulierend einzuwirken. Mittels Übermittlung bzw. Bereitstellung von Kontextinformationen durch bspw. den Nutzer an bzw. für das erfindungsgemäß bereitgestellte Informationssystem, kann die Relevanzprüfung noch vor einer eventuellen Kontaktaufnahme mit dem Nutzer Informationen blocken. Der Nutzer kann dem Informationssystem bspw. mitteilen, dass er im Moment "gestresst" ist, woraufhin gemäß dem erfindungsgemäßen Verfahren eine sehr enge Relevanzprüfung durchgeführt wird und nur noch Informationen sehr hoher Priorität an den Nutzer weitergegeben werden.

Gemäß einer weiteren Ausgestaltung des erfindungsgemäßen Verfahrens ist vorgesehen, dass eine Antwort des Nutzers auf die Initiierung des proaktiv initiierten Dialogs mit dem Nutzer durch das erfindungsgemäß bereitgestellte Informationssystem als Informationsgrundlage für eine Steuerung weiterer Schritte des Informationssystems verwendet wird.

Ist der Nutzer in der Lage, Informationen zu empfangen und stimmt er der Interaktion zu, so reagiert er positiv auf die proaktive Initiierung durch das erfindungsgemäß bereitgestellte Informationssystem. In Ausgestaltung des erfindungsgemäßen Verfahrens ist vorgesehen, Eingaben des Nutzers, die als Reaktion auf die Eingangsfrage formuliert wurden, auszuwerten und nachfolgende Schritte auf diese Eingabe abzustimmen.

Um dem Nutzer als perfekter Assistent zu dienen, ist es erforderlich, ständig aktuelle Informationen zu empfangen und diese, bei gegebener Relevanz und Plausibilität, an den Nutzer weiterzuleiten. Dabei erfolgt die Relevanz- und Plausibilitätsprüfung in Abhängigkeit von Kontextwissen des Informationssystems vom Nutzer. Das bedeutet, dass die zur Übermittlung an den Nutzer zur Verfügung stehenden Informationen dahingehend gefiltert werden, dass sie eine größtmögliche Unterstützung für den jeweiligen Nutzer in seinem jeweiligen Kontext bereitstellen. Der Kontext des jeweiligen Nutzers kann bspw. von dessen Alter, sozialem Status, Krankheitsgeschichte, Termindruck, etc. abhängen.

In einer weiteren möglichen Ausführungsform des erfindungsgemäßen Verfahrens ist vorgesehen, dass dem erfindungsgemäß vorgesehenen Informationssystem für den Nutzer relevante Informationen von bzw. über mindestens einem der folgenden Informationsträger bzw. Informationskanäle übermittelt werden: optischer Datenträger, Speichermedium, Netzwerk, insbesondere Drahtlosnetzwerk, Funkverbindung, Eingabe über ein Bedienelement, Eingabe über Sprache.

Um dem Nutzer als Assistent zu dienen und den Nutzer durch vorgeschaltete Relevanz- und Plausibilitätsprüfungen zu entlasten, ist es nötig, dass der Nutzer sich auf diejenigen Informationen, die als relevant und plausibel befunden und an den Nutzer weitergeleitet werden, verlassen kann. Demnach sollten die Informationen auch jeweilige Interessen des Nutzers abdecken und keine Informationslücke hinterlassen, welche den Nutzer zu selbständigem Suchen veranlassen würde und die Entlastung hinfällig werden ließe. Daher erscheint es sinnvoll, dass das erfindungsgemäße Verfahren in weiterer Ausgestaltung auf einen Informationspool zugreifen kann, der alle in Frage kommenden Informationen bereit hält. Dies ist bspw. durch eine Verbindung zum Internet vorgesehen.

Gemäß einer weiteren möglichen Ausführungsform des erfindungsgemäßen Verfahrens ist vorgesehen, dass Prozesse zur Steuerung des erfindungsgemäß bereitgestellten Informationssystems im Hintergrund, daher vom Nutzer unbemerkt ausgeführt werden. Dies bedeutet, dass eine Versorgung mit und eine Auswertung von Informationen, welche von potentieller Relevanz für den Nutzer sind, bei dem erfindungsgemäßen Verfahren im Hintergrund, d. h. unbemerkt vom Nutzer abläuft. Bedingt durch den Ablauf im Hintergrund ist es möglich, dass aus jedem beliebigen Kontext der MMI heraus (Navigation, Telefon, Medien ...) sowohl vom Nutzer als auch von dem erfindungsgemäß vorgesehenen Informationssystem aus agiert bzw. reagiert werden kann. Bspw. kann eine zu übermittelnde Information bei Bedarf von einer Ausgabe über ein Smartphone auf einen fahrzeugeigenen Bildschirm übertragen werden, sofern der fahrzeugeigene Bildschirm mit dem Informationssystem in Wirkkontakt steht, ohne dass dabei der Dialog mit dem Informationssystem unterbrochen werden muss. Der Ablauf des erfindungsgemäßen Verfahrens im Hintergrund ermöglicht eine vom Nutzer unabhängige Modifikation der zugrundliegenden Verfahrensschritte und/oder Berechnungen. Weiterhin wird dadurch unter anderem ein Wechsel einer Ausgabemodalität von bspw. einem Mensch-Maschine-Interface eines Fahrzeugs auf ein Mobiltelefon oder ähnliches ermöglicht.

Ferner betrifft die vorliegende Erfindung ein Informationssystem zur proaktiven Dialogführung mit einem Nutzer. Das erfindungsgemäße Informationssystem dient insbesondere dazu, das erfindungsgemäße Verfahren auszuführen.

Das erfindungsgemäße Informationssystem ist derart konfiguriert, dass von dem Informationssystem an den Nutzer potentiell zu übermittelnde Informationen zunächst eine Relevanz- und/oder Plausibilitätsprüfung, basierend auf Kontextwissen über den Nutzer durchlaufen. Das Informationssystem weist mindestens folgende Komponenten auf: ein Mikrofon, das dazu konfiguriert ist, akustische Befehle aufzunehmen, eine Sprachausgabevorrichtung für akustische Signale, ein Rechenelement, welches dazu konfiguriert ist, zur Plausibilitäts- und/oder Relevanzprüfung notwendige Berechnungen auszuführen und eine Empfangseinheit zum Empfang von für den Fahrer potentiell relevanten Informationen.

Um eine qualitativ hochwertige Unterstützung des Nutzers zu gewährleisten, sind technische Anforderungen zu erfüllen, welche erfindungsgemäß durch das vorliegende Informationssystem gelöst werden. Dazu zählen ein Mikrofon zur Übermittlung von Sprachbefehlen des Nutzers an das Informationssystem, eine Sprachausgabevorrichtung, um mit dem Nutzer verbal zu interagieren und ein Rechenelement, welches die notwendigen Verarbeitungsprozesse, wie bspw. die der Plausibilitäts- und Relevanzprüfung zugrundeliegenden Berechnungen ausführt. Ferner kann eine Anzeigeeinheit vorgesehen sein, um letztlich an den Fahrer zu übermittelnde Informationen anzuzeigen. Diese Anzeigeeinheit, bspw. ein Bildschirm bzw. Display kann Teil des Informationssystems sein, muss aber zumindest mit diesem in Wirkkontakt stehen.

Weiterhin ist, gemäß einer möglichen Ausgestaltung, vorgesehen, dass das erfindungsgemäße Informationssystem in einem Fahrzeug verbaut bzw. verbaubar ist. Speziell im Straßenverkehr ist eine Unterstützung des Nutzers und insbesondere des Fahrers von großer Nützlichkeit, da dort nur wenig Zeit für ablenkende, informationsgenerierende Prozesse bleibt.

Gemäß einer weiteren möglichen Ausführungsform des erfindungsgemäßen Informationssystem ist vorgesehen, dass Informationen, welche bspw. letztlich in Reaktion auf eine bejahende Antwort des Nutzers auf eine im Rahmen einer durch das Informationssystem initiierten, proaktiven Interaktion gestellten Frage zu übermitteln sind, durch optische und/oder akustische Signalgeber wiedergegeben werden. Dabei kann bspw. eine Verkehrslage für eine vom Nutzer vorgegebene Route über einen Lautsprecher ausgegeben und unterstützend auf einem Bildschirm dargestellt werden. Dabei ist vorgesehen, dass akustische Informationen, welche meist in Form von Sprache ausgegeben wird, durch einen Lautsprecher und/oder einen anderen geeigneten Tonerzeuger wiedergegeben werden.

Neben der Interaktion mittels Sprache kann es in Einzelfällen auch sinnvoll erscheinen, Informationen von Interesse zu visualisieren, um dem Nutzer die Informationen gezielter und dadurch auch schneller und effizienter zu übermitteln. Speziell im Straßenverkehr ist die Übermittlung einer Routeninformation ausschließlich mit verbalen Mitteln eher störend als hilfreich. Um dies zu vermeiden, können die Informationen auch über eine optische Anzeigeeinheit der Art TFT, LCD, Röhre, Plasma, LED oder jeder anderen technisch geeigneten optischen Anzeigeeinheit dargestellt werden.

Bei dem erfindungsgemäßen Verfahren zur proaktiven Dialogführung der eingangs beschriebenen Art wird die Aufgabe, einen Nutzer durch Initiierung eines Dialogs so zu unterstützen, dass dieser in seiner Aufmerksamkeitsleistung nicht durch irrelevante Informationen abgelenkt und dennoch mit den für ihn relevanten Informationen versorgt wird, dadurch gelöst, dass die von dem erfindungsgemäß bereitgestellten technischen Informationssystem proaktiv an den Nutzer potentiell zu übermittelnden Informationen eine auf Kontextwissen über den Nutzer basierende Relevanz- und Plausibilitätsprüfung durchlaufen.

Das erfindungsgemäße Verfahren offenbart einen Verfahrensschritt, welcher einen Dialog mit einem Nutzer proaktiv, d. h. einer Bedienung des Nutzers zuvorkommend, gestaltet. Es sind bereits Systeme bekannt, welche Informationen an den jeweiligen Nutzer weiterleiten, ohne dass ein Zutun oder eine Aufforderung des jeweiligen Nutzers dazu nötig wäre, jedoch fehlt diesen eine Möglichkeit zur Intervention, d. h. zur Ablehnung der Wiedergabe durch Befehle, insbesondere durch sprachliche Befehle des Nutzers.

Eine proaktive Dialogführung, wie sie erfindungsgemäß in dem vorliegenden Verfahren realisiert ist, dient der Unterstützung des Nutzers, insbesondere des Fahrers eines Fahrzeugs, durch Versorgung mit relevanten und plausiblen Informationen. Dabei ist es nicht zwingend notwendig, eine Kaskade von Folgezuständen als Antwort auf eine Nutzereingabe zu durchlaufen, wie bspw. in der DE 10 2010 051 833 A1 offenbart. Vielmehr ist eine Beurteilung zu leisten, ob eine Information sowohl plausibel als auch relevant für eine Übermittlung ist und dadurch eine Vorauswahl dem Nutzer serviceorientiert abzunehmen. Daher ist das vorliegende erfindungsgemäße Verfahren dahingehend optimiert, dass relevante Informationen auch ohne ein Ein- oder Mitwirken des Nutzers an diesen übermittelt werden und dennoch auf dessen Kontext abgestimmt sind. Nur in Verbindung mit Kontextwissen ist es überhaupt möglich, eine sinnvolle Einteilung in relevante oder irrelevante Informationen zu erreichen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

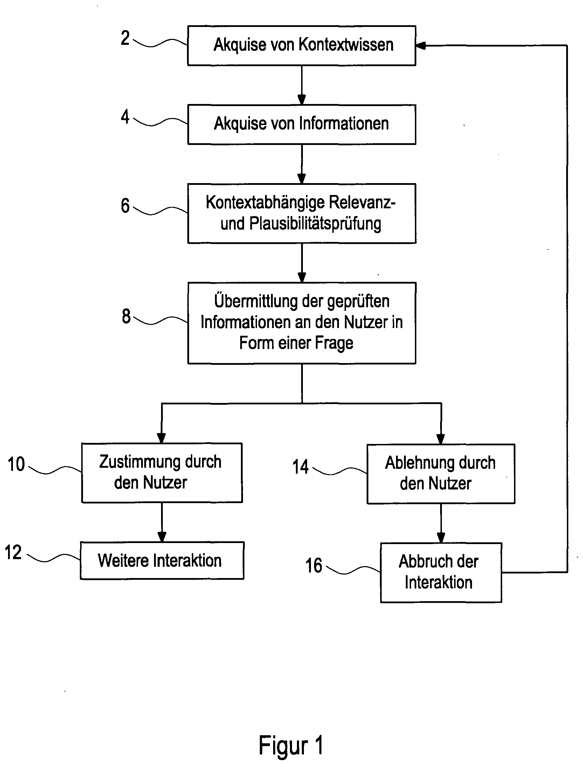

Figur 1 zeigt ein Ablaufdiagramm einer Ausführungsform des erfindungsgemäßen Verfahrens.

In einem Ausführungsbeispiel des erfindungsgemäßen Verfahrens, wie es in Figur 1 dargestellt ist, möchte ein Nutzer eines Fahrzeugs seinen morgendlichen Arbeitsweg in seinem Fahrzeug zurücklegen. Dazu begibt sich der Nutzer in das Fahrzeug, in welchem eine Ausführungsform des erfindungsgemäßen Informationssystems eingebaut ist, was nach Einsteigen des Nutzers in das Fahrzeug automatisch oder durch eine Bedienhandlung des Nutzers aktiviert wird. Aufgrund einer im Vorfeld getätigten Eingabe durch den Nutzer, wie es in Schritt 2 gezeigt ist, werden Informationen bezüglich des Arbeitsweges, welcher wahrscheinlich vom Nutzer gewählt wird, generiert. Über Verkehrsfunk, wie es in Schritt 4 gezeigt ist, erhält das erfindungsgemäße Informationssystem die Information, dass auf dem Arbeitsweg widrige Verkehrsbedingungen, wie bspw. Stau herrschen. Diese Information wird erfindungsgemäß nach den Kriterien Plausibilität und Relevanz bewertet, wie es in Schritt 6 gezeigt ist. Werden die Informationen als plausibel und relevant bewertet, wird proaktiv ein Dialog in Form einer Frage gestartet, wie es in Schritt 8 gezeigt ist.

Noch in der Garage stellt das Informationssystem dem Nutzer die Frage, ob dieser mit den aktuellen Verkehrsinformationen versorgt werden möchte. Reagiert der Nutzer positiv, bspw. durch Äußerung verbaler Zustimmung, wie in Schritt 10 gezeigt, wird ihm diese Information mit Fokus auf seinen Arbeitsweg dargeboten, wie in Schritt 12 gezeigt. Reagiert der Nutzer negativ, wie in Schritt 14 gezeigt, wird der Dialog abgebrochen oder verschoben und zu einem späteren Zeitpunkt, wie in Schritt 16 gezeigt, erneut gestartet.

Weiterhin ist es für den Nutzer möglich, seine ursprüngliche Planung in Anlehnung an die neue Informationslage anzupassen und das Fahrzeug zugunsten der öffentlichen Verkehrsmittel stehen zu lassen. Dafür kann eine weitere Ausführungsform des erfindungsgemäßen Verfahrens auf einem mobilen Endgerät wie bspw. einem Mobiltelefon ausgeführt werden, wodurch sich der Nutzer weiterhin über das mobile Endgerät mit neuen, der Situation angepassten Informationen versorgen lassen kann. So kann durch das erfindungsgemäße Verfahren bspw. eine Applikation für die Planung der Reise mit den öffentlichen Verkehrsmitteln gestartet werden, wie in Schritt 12 gezeigt.

## Patentansprüche

1. Verfahren zur proaktiven Dialogführung eines Informationssystems mit einem Nutzer, **dadurch gekennzeichnet, dass** von dem Informationssystem, welches in einem Fahrzeug oder einem anderen mobilen technischen System integriert ist, an den Nutzer potentiell zu übermittelnde Informationen eine Relevanz- und/oder Plausibilitätsprüfung, basierend auf Kontextwissen über den Nutzer, durchlaufen, und bei Erkennen von zu übermittelnden Informationen das Informationssystem proaktiv einen Dialog mit dem Nutzer initiiert.

2. Verfahren nach Anspruch 1, wobei der proaktiv initiierte Dialog des Informationssystems mit dem Nutzer in Form von Sprache erfolgt.

3. Verfahren nach Anspruch 2, wobei der proaktiv initiierte Dialog des Informationssystems mit dem Nutzer durch eine Frage gestartet wird.

4. Verfahren Anspruch 3, wobei eine Antwort des Nutzers auf die Initiierung des durch das Informationssystem proaktiv initiierten Dialogs des Informationssystems mit dem Nutzer als Informationsgrundlage für eine Steuerung weiterer Verfahrensschritte durch das Informationssystem verwendet wird.

5. Verfahren nach einem der voranstehenden Ansprüche, wobei dem Informationssystem für den Nutzer relevante Informationen von bzw. über mindestens einen der folgenden Informationsträger bzw. Informationskanäle übermittelt werden: optischer Datenträger, Speichermedium, Netzwerk, insbesondere Drahtlosnetzwerk, Funkverbindung, Eingabe über ein Bedienelement, Eingabe über Sprache.

6. Verfahren nach einem der voranstehenden Ansprüche, wobei Prozesse zur Steuerung des Informationssystems im Hintergrund, daher vom Nutzer unbemerkt ausgeführt werden.

7. Informationssystem zur proaktiven Dialogführung mit einem Nutzer, **dadurch gekennzeichnet, dass** das Informationssystem derart konfiguriert ist, dass von dem Informationssystem an den Nutzer potentiell zu übermittelnde Informationen eine Relevanz- und/oder Plausibilitätsprüfung, basierend auf Kontextwissen über den Nutzer, durchlaufen, wobei das Informationssystem mindestens folgende miteinander in Wirkkontakt stehende Komponenten aufweist: ein Mikrofon, das dazu konfiguriert ist, akustische Befehle aufzunehmen, eine Sprachausgabevorrichtung für akustische Signale, ein Rechenelement, welches dazu konfiguriert ist, zur Plausibilitäts- und/oder Relevanzprüfung notwendige Berechnungen auszuführen und eine Empfangseinheit zum Empfang von für den Fahrer potentiell relevanten Informationen.

8. Informationssystem nach Anspruch 7, wobei Informationen, welche auf Basis einer Antwort des Nutzers und/oder auf Basis eines durch eine Frage des Informationssystems initiierten, proaktiven Dialogs ermittelt wurden, durch optische und/oder akustische Signalgeber wiedergegeben werden.

## Claims

1. Method for proactive dialogue management of an information system with a user, **characterised in that**, from the information system which is integrated in a vehicle or another mobile technical system, information which is intended to be potentially transmitted to the user is subjected to a relevance and/or plausibility test, based on contextual knowledge relating to the user, and, when information which is intended to be transmitted is identified, the information system proactively initiates a dialogue with the user.

2. Method according to claim 1, wherein the proactively initiated dialogue of the information system with the user is carried out in the form of speech.

3. Method according to claim 2, wherein the proactively initiated dialogue of the information system with the user is started with a question.

4. Method according to claim 3, wherein a response of the user to the initiation of the dialogue proactively initiated by the information system in respect of the information system with the user is used as an information basis for a control of further method steps by the information system.

5. Method according to any one of the preceding claims, wherein information relevant to the user is transmitted to the information system from or via at least one of the following information carriers or information channels: optical data carriers, storage medium, network, in particular wireless network, radio connection, input via an operating element, input via speech.

6. Method according to any one of the preceding claims, wherein processes for controlling the information system are carried out in the background, therefore unnoticed by the user.

7. Information system for proactive dialogue management with a user, **characterised in that** the information system is configured in such a manner that information which is intended to be potentially transmitted to the user by the information system is subjected to a relevance and/or plausibility test, based on contextual knowledge relating to the user, wherein the information system has at least the following components which are in operational contact with each other: a microphone which is configured to receive acoustic commands, a speech output device for acoustic signals, a processing element which is configured to carry out calculations which are necessary for the plausibility and/or relevance test and a receiving unit for receiving information which is potentially relevant to the driver.

8. Information system according to claim 7, wherein information which has been established on the basis of a response of the user and/or on the basis of a proactive dialogue which is initiated by a question of the information system is reproduced by means of optical and/or acoustic signal transmitters.

## Revendications

1. Procédé destiné à la conduite proactive de dialogue d'un système d'information avec un utilisateur, **caractérisé en ce que** des informations devant être transmises éventuellement à l'utilisateur par le système d'information qui est intégré dans un véhicule ou dans un autre système technique mobile sont soumises à un contrôle de pertinence et/ou de vraisemblance, basé sur des connaissances contextuelles concernant l'utilisateur, et **en ce que**, lors de la détection d'informations devant être transmises, le système d'information déclenche un dialogue avec l'utilisateur de manière proactive.

2. Procédé selon la revendication 1, dans lequel le dialogue, déclenché de manière proactive, du système d'information avec l'utilisateur s'effectue sous une forme vocale.

3. Procédé selon la revendication 2, dans lequel le dialogue, déclenché de manière proactive, du système d'information avec l'utilisateur commence par une question.

4. Procédé selon la revendication 3, dans lequel une réponse de l'utilisateur au déclenchement du dialogue, déclenché de manière proactive par le système d'information, du système d'information avec l'utilisateur est utilisée par le système d'information comme base d'informations en vue d'une commande d'autres étapes de procédé.

5. Procédé selon l'une des revendications précédentes, dans lequel des informations pertinentes pour l'utilisateur sont transmises au système d'information par ou par l'intermédiaire d'au moins un des supports d'informations ou canaux d'informations suivants : support optique de données, mémoire, réseau, en particulier réseau sans fil, liaison radio, entrée via un élément de commande, entrée vocale.

6. Procédé selon l'une des revendications précédentes, dans lequel des processus destinés à la commande du système d'information sont mis en oeuvre en arrière-plan, et donc sans que l'utilisateur ne le perçoive.

7. Système d'information destiné à la conduite proactive de dialogue avec un utilisateur, **caractérisé en ce que** le système d'information est configuré de telle sorte que des informations devant être transmises éventuellement à l'utilisateur par le système d'information sont soumises à un contrôle de pertinence et/ou de vraisemblance, basé sur des connaissances contextuelles concernant l'utilisateur, le système d'information comportant au moins les composants suivants en contact actif les uns avec les autres : un microphone qui est configuré pour recevoir des instructions acoustiques, un dispositif de sortie de paroles pour des signaux acoustiques, un élément de calcul qui est configuré pour mettre en oeuvre des calculs nécessaires au contrôle de pertinence et/ou de vraisemblance et une unité de réception destinée à la réception d'informations éventuellement pertinentes pour le conducteur.

8. Système d'information selon la revendication 7, dans lequel des informations qui ont été déterminées sur la base d'une réponse de l'utilisateur et/ou sur la base d'un dialogue proactif déclenché par une question du système d'information sont reproduites par des générateurs de signaux optiques et/ou acoustiques.
